# EUROPÄISCHE PATENTSCHRIFT

(11) **EP 3 168 341 B1**
(45) Veröffentlichungstag und Bekanntmachung des Hinweises auf die Patenterteilung: **01.12.2021**
(21) Anmeldenummer: 16194272.7
(22) Anmeldetag: 18.10.2016
(51) Int. Cl.: D01H 1/241, F16H 7/12, F16H 7/08

(54) **SPANNVORRICHTUNG FÜR EINEN ANTRIEBSRIEMEN VON SPINDELN EINER SPINNMASCHINE**
TENSIONING DEVICE FOR A DRIVE BELT OF SPINDLES OF A SPINNING MACHINE
MOYEN POUR FAIRE VARIER LA TENSION D'UNE COURROIE D'ENTRAÎNEMENT DE BROCHES D'UN MÉTIER À FILER

(30) Priorität: 09.11.2015 CH 16232015
(43) Veröffentlichungstag der Anmeldung: 17.05.2017
(73) Patentinhaber: MASCHINENFABRIK RIETER AG, 8406 Winterthur (CH)
(72) Erfinder: DÜBENDORFER, Martin, 8475 Ossingen (CH)

(56) Entgegenhaltungen:
- CN-A- 104 372 459
- CN-Y- 201 024 265
- DE-A1- 2 643 366
- DE-C- 261 056
- DE-C- 499 564
- US-A- 1 848 423

## Beschreibung

Die Erfindung bezieht sich auf eine Spannvorrichtung für einen Antriebsriemen von Spindeln einer Spinnmaschine mit einer um eine Achse drehbaren ersten Spannrolle welche über einen ersten Hebel schwenkbar ist und mit einer um eine weitere Achse drehbaren zweiten Spannrolle welche über einen zweiten Hebel schwenkbar ist. Dabei sind der erste Hebel und der zweite Hebel voneinander beabstandet auf einer jeweiligen Schwenkachse in einem Gehäuse gehalten und der erste Hebel mit dem zweiten Hebel über ein Federelement miteinander gekoppelt.

Einfache Spannmittel zum Spannen von Antriebsriemen sind aus dem Stand der Technik bekannt. Eine speziell für Riemenantriebe von Spinn- und Zwirnmaschinen mit umschaltbarer Drehrichtung ausgerichtete Spannvorrichtung wird beispielsweise in der CH 132 870 offenbart. Wie bereits in der CH 132 870 gezeigt, werden in Ringspinnmaschinen häufig jeweils vier Spindeln mit einem gemeinsamen Riemen angetrieben. Dieser Antriebsriemen umläuft die vier Spindeln und wird über ein Antriebsrad und eine Spannvorrichtung geführt.

In der Spinnerei ist es üblich Garne mit Ringspinnmaschinen herzustellen, welche entweder eine sogenannte S-Drehung oder Z-Drehung aufweisen. Die unterschiedlichen Drehungen werden erreicht durch eine Umkehr der Drehrichtung der Spindeln und damit einer Umkehr der Laufrichtung des Antriebsriemens. Soll die Drehrichtung der Spindeln gewechselt werden, bedingt dies bei Verwendung einer einzelnen Spannrolle auch einen Umbau dieser Spannrolle, da eine Spannrolle nur wirksam sein kann, wenn sie im Leertrum, also im ablaufenden Trum des Antriebsriemens eingesetzt wird. Um diesem Umstand Rechnung zu tragen schlägt nun die CH 132 870 vor, zwei Spannrollen einzusetzen welche jeweils an einem Schwenkhebel befestigt und über ein Federelement miteinander verbunden sind. Durch diese Konstruktion der Spannvorrichtung wird es möglich, dass bei einem Drehrichtungswechsel automatisch die sich im Leertrum befindliche Spannrolle die Funktion zur Spannung des Antriebsriemens übernimmt.

Eine gleichartige Konstruktion offenbart auch das Gebrauchsmuster CN 201037170 Y. Im Unterschied zur CH 132 870 ist im Gebrauchsmuster ein Gehäuse gezeigt, welches das Federelement und die Lagerung der Schwenkhebel aufnimmt.

US1848423 offenbart eine Spannvorrichtungzum Spannen eines Antriebsriemens für Spindeln einer Spinnmaschine. Ein erster Hebel ist starr mit einem zweiten Hebel verbunden, beide sind schwenkbar gelagert und über ein Federelement miteinander gekoppelt.

Weiter sind auch Spannvorrichtungen mit zwei Spannrollen bekannt, bei welchen jeweils die aufgrund der Drehrichtung ungenutzte Spannrolle in einer bestimmten Stellung blockiert wird. Diejenige Spannrolle, welche sich aufgrund der Drehrichtung im Zugtrum des Antriebsriemens befindet wird mechanisch in ihrer Schwenkbewegung blockiert, sodass die sich im Leertrum des Antriebsriemens befindliche Spannrolle mit Hilfe des die beiden Spannrollen verbindenden Federelementes die notwendige Spannung auf den Antriebsriemen aufbringen kann. Wird nun eine Umschaltung der Drehrichtung vorgenommen, muss entsprechend die Blockierung der Spannrolle getauscht werden. Dies hat den Nachteil, dass für eine Umschaltung ein Umbau der Spannvorrichtungen nötig und damit längere Stillstandszeiten erforderlich sind.

Ringspinnmaschinen weisen bis zu 2'000 Spindeln oder mehr auf. Über die gesamte Länge einer Ringspinnmaschine wird dabei ein Antriebsstrang geführt, welcher jeweils für den Antrieb von vier Spindeln ein Antriebsrad aufweist, mit Hilfe dessen der Antriebsriemen in Bewegung versetzt wird. Der Antriebsstrang wird in der Regel von einem einzigen Motor angetrieben. Dieser Motor kann bei einem Stromausfall als Generator genutzt werden. Dabei wird durch den Motor in seiner Generator-Funktion soviel elektrische Energie generiert, dass eine gesteuerte Stillsetzung der Ringspinnmaschine möglich wird trotz der fehlenden Energieversorgung aufgrund des Stromausfalls. In dieser betriebsweise, wird über die Antriebsriemen die in den Spindeln durch ihre Drehung gespeicherte Energie über die Antriebsriemen auf den Antriebsstrang übertragen. Eine derartige Umschaltung des Antriebs von antreibendem Antriebsstrang zu angetriebenem Antriebsstrang entspricht in Bezug auf die Belastung der Antriebsriemen einer Umschaltung der Drehrichtung der Spindeln. Im Gegensatz zu der bekannten Umschaltung der Drehrichtung der Spindeln erfolgt hier jedoch keine Umkehr der Drehrichtung. Einzig die Antriebsriemen werden mit einer Kraftrichtungsumkehr belastet. Das im Motor-Betrieb gespannte Leertrum wird im Generator-Betrieb zum Zugtrum. Da die Umschaltung des Antriebs durch einen Stromausfall bedingt während des Betriebs der Ringspinnmaschine erfolgt, sind Spannvorrichtungen welche einen Umbau im Stillstand erfordern grundsätzlich nicht geeignet. Bei derartigen Spannvorrichtungen ist der Antriebsriemen nach der Umschaltung nicht mehr gespannt, was zur Folge hat das einerseits die Energieübertragung von den Spindeln auf den Antriebsstrang ungenügend ist und andererseits die Spindeln aufgrund des fehlenden Reibschlusses bei bereits stehendem Antriebsstrang noch weiterdrehen. Eine gesteuerte Stillsetzung der Ringspinnmaschine ist dadurch unmöglich, wodurch ein Wiederanfahren der Ringspinnmaschine aus einem undefinierten Zustand erfolgen muss.

Es hat sich gezeigt, dass die Verwendung einer doppelseitigen Spannvorrichtung wie sie in der CH 132 870 vorgeschlagen wird, zwar bei einer Umschaltung der Drehrichtung im Stillstand der Ringspinnmaschine funktioniert, bei einer spontanen Umschaltung des Antriebs in einen Generator-Betrieb jedoch unzulänglich ist. Es ergeben sich Schwingungen der Spannvorrichtung, welche sich in einer Hin- und Her-Bewegung der beiden Spannrollen auswirken, was bei jeder Bewegung zu einem kurzfristigen Verlust des Reibschlusses zwischen dem Antriebsriemen und dem Antriebsrad respektive den Spindeln führt. Im Ergebnis ist ein gesteuertes Stillsetzen der Ringspinnmaschine nicht möglich, da der fehlende Reibschluss zu einem nicht kontrollierbaren Schlupf des Antriebsriemens führt. Auch sind die Verhältnisse bei der Vielzahl von Antriebsriemen einer Ringspinnmaschine unterschiedlich und damit nicht beherrschbar.

Der Erfindung liegt somit die Aufgabe zugrunde, eine Spannvorrichtung bereitzustellen, welche einer Umschaltung des Antriebsmotors in einen Generator-Betrieb eine zuverlässige und schlupffreie Energieübertragung von den Spindeln auf den Antriebsstrang und dadurch ein gesteuertes Stillsetzen der Ringspinnmaschine ermöglicht.

Zur Lösung der Aufgabe wird nunmehr vorgeschlagen eine Spannvorrichtung zum Spannen eines Antriebsriemens für Spindeln einer Ringspinnmaschine vorzusehen, welche eine um eine Achse drehbare erste Spannrolle, die über einen ersten Hebel schwenkbar ist und eine um eine weitere Achse drehbare zweite Spannrolle, die über einen zweiten Hebel schwenkbar ist vorzuschlagen. Dabei sind der erste Hebel und der zweite Hebel voneinander beabstandet auf einer jeweiligen Schwenkachse in einem Gehäuse gehalten und der erste Hebel mit dem zweiten Hebel über ein Federelement miteinander gekoppelt. Die Hebel sind in ihrer Schwenkbewegung um die Schwenkachsen durch jeweils einen Anschlag eingeschränkt. Diese Einschränkung der Schwenkbewegung bewirkt, dass der Winkel zwischen einer ersten Verbindungslinie von der Achse der ersten Spannrolle zur Schwenkachse des ersten Hebels und einer zweiten Verbindungslinie von der Achse der zweiten Spannrolle zur Schwenkachse des zweiten Hebels kleiner als 30° ist. Diese Bauweise der Spannvorrichtung hat den vorteilhaften Effekt, dass sich bei einem Lastwechsel im Antriebsriemen während des Betriebes immer eine stabile Lage der Spannrollen ergibt. Die durch den Wechsel der Kraftrichtung im Antriebsriemen von einer Stellung im Zugtrum zu einer Stellung im Leertrum gelangende Spannrolle wird durch die andere, über das Federelement gekoppelte, Spannrolle nicht zu einem Pendeln angeregt. Die in das Zugtrum gelangende Spannrolle wird durch die Kraftwirkung im Antriebsriemen an den vorhandenen Anschlag gedrückt und verharrt in der Folge in dieser Stellung, was mit Hilfe des Federelementes eine einwandfreie Spannung des Antriebsriemens durch die sich nun im Leertrum befindliche Spannrolle ermöglicht. Somit ist bei Einsatz der erfindungsgemässen Spannvorrichtung ein einwandfreier und schlupffreier Generator-Betrieb des Antriebes gewährleistet und die Ringspinnmaschine kann auch bei einem unerwarteten Stromausfall gesteuert stillgesetzt werden.

Die Einschränkung des zur Verfügung stehenden Schwenkbereichs für die einzelne Spannrolle hat sich als herausragende Lösung zur Beherrschung des Schwingungs-Systems gezeigt, welches sich durch die Verbindung der beiden Schwenkhebel mit einem Federelement ergibt. Die Bewegung des einen Hebels wird über das Federelement auf den zweiten Hebel übertragen. Ist diese Bewegung zu weit, ergibt sich ein Hin- und Herschwingen der beiden Hebel. Ist die Bewegung jedoch zu eng, wie beispielsweise bei Blockierung eines Hebels, kann die Funktion des Spannens des Antriebriemens nicht durch die andere Spannrolle übernommen werden. Bei Umkehr der Kraftrichtung im Antriebsriemen muss die ins Leertrum gelangende Spannrolle die frei werdende Antriebsriemenlänge aufgrund der ins Zugtrum gelangenden Spannrolle kompensieren können. Ist der Winkel, welche die Hebel auseinanderschwenken können grösser als 30°, ergibt sich bei der Umschaltung eine zu grosse freie Antriebsriemenlänge, welche zu einem Nachlaufen der im Leertrum befindlichen Spannrolle führt.

Die beiden Hebel sind im Gehäuse drehbar gelagert, wobei jeder Hebel auf einer im Gehäuse gehaltenen Schwenkachse separat gelagert ist. Die Anschläge welche die Schwenkbewegung der Hebel einschränken können in unterschiedlicher Bauform und auch an unterschiedlichen Stellen vorgesehen sein. In einer ersten Ausführungsform sind die Anschläge jeweils auf der dem Federelement abgewandten Seite des jeweiligen Hebels und zwischen der Schwenkachse und der Spannrolle angeordnet. In einer zweiten Ausführungsform sind die Anschläge jeweils auf der dem Federelement zugewandten Seite des jeweiligen Hebels und in einem Bereich des jeweiligen Hebels auf einer der Spannrolle gegenüberliegenden Seite der Schwenkachse angeordnet. In dieser Ausführung ist der Hebel beginnend bei der Spannrolle über die Schwenkachse hinaus verlängert um auf den Anschlag zu stossen. Es sind auch weitere Anordnungen der Anschläge denkbar, beispielsweise können die Anschläge in die Schwenkachsen integriert werden, sodass nur eine eingeschränkte Schwenkbewegung der Hebel aufgrund der Konstruktion der Verbindung zwischen Hebel und Schwenkachse möglich ist.

In einer vorteilhaften Ausführung sind die Anschläge für die Hebel mit dem Gehäuse einstückig verbunden. Das Gehäuse ist damit an der Stelle wo die Hebel angeordnet sind mit einer Ausbuchtung versehen, welche als Anschlag dient. Ebenfalls ist es denkbar, dass die Hebel entsprechend ausgebildet sind um an einer bestimmten Stelle des Gehäuses durch eine entsprechend ausgeformte Erhebung an das Gehäuse zu stossen. Auch eine entsprechend gebogene Form der Hebel welche zum Anschlagen der Hebel an einer bestimmten Stelle des Gehäuses vorgesehen ist entspricht einer möglichen Ausführung. Alle diese Varianten sind darunter zu verstehen, dass die Anschläge mit dem Gehäuse einstückig verbunden sind.

Eine alternative Ausführungsform stellen Anschläge dar, welche zwischen das Gehäuse und den Hebel eingefügt werden können. Derartige Anschläge können durch das Gehäuse durch eine entsprechende Formgebung gehalten werden oder in dafür im Gehäuse vorgesehene Aufnahmen eingelegt werden. Eine derartige Ausführung hat den Vorteil, dass die Anschlaghöhe und damit die mögliche Auslenkung der Hebel und damit der entsprechenden Spannrolle auf eine einfache Art und Weise durch den Austausch der Anschläge verändert werden kann.

Eine weitere alternative Ausführungsform stellen Anschläge dar, welche ausserhalb des Gehäuses ortsfest befestigt sind. Die Anschläge können an beliebigen Stellen im Bereich der Spannvorrichtung des Antriebsriemens an dafür vorgesehenen Haltern oder auch am Maschinengestell befestigt sein, sofern deren Wirkung auf die Hebel der Spannvorrichtung dazu führt, dass die Schwenkbewegung der Hebel eingeschränkt wird.

Als Federelement hat sich die Verwendung von Zugfedern als vorteilhaft erwiesen. Zugfedern können in ihrer Ausprägung auf die eingesetzten Antriebsriemen abgestimmt werden. Die zur Anwendung kommenden Zugfedern sind meist aus Stahl als Runddrahtfedern ausgeführt. Es sind jedoch auch Zugfedern aus anderen Materialien wie beispielsweise Kunststoff oder Zugfedern anderer Bauart wie beispielsweise Spiralfedern denkbar.

Weiterhin ist es vorteilhaft, wenn die Schwenkachsen einen Abstand von 80 mm bis 150 mm aufweisen. Es hat sich bewährt, dass der dadurch sich ergebende Abstand zwischen den Spannrollen zu einer Umschlingung des Antriebsrades und der Spannrollen durch den Antriebsriemen führt, der sich in einem wirksamen Reibschluss zwischen dem Antriebsrad und dem Antriebsriemen sowie dem Antriebsriemen und den Spannrolle ergibt. In einer bevorzugten Ausführung ist der Abstand zwischen den Schwenkachsen 100 mm bis 120 mm.

Weiterhin vorteilhaft ist es, wenn die Achse der jeweiligen Spannrolle zur Schwenkachse des jeweiligen Hebels einen Abstand von 80 mm bis 150 mm aufweist. Dies lässt eine Befestigung des Gehäuses in einem bevorzugten Abstand zum Antriebsrad zu. Besonders bevorzugt beträgt der Abstand zwischen Schwenkachse des Hebels und der Achse der Spannroll bei einem Hebel 100 mm bis 120 mm.

In einer bevorzugten Ausführungsform ist der Abstand zwischen den Schwenkachsen und der Abstand zwischen der Achse der jeweiligen Spannrolle und der Schwenkachse des jeweiligen Hebels gleich. Dadurch ergeben sich ideale Bewegungsabläufe bei einer Umschaltung der Kraftrichtung im Antriebsriemen während des Betriebes einer Ringspinnmaschine.

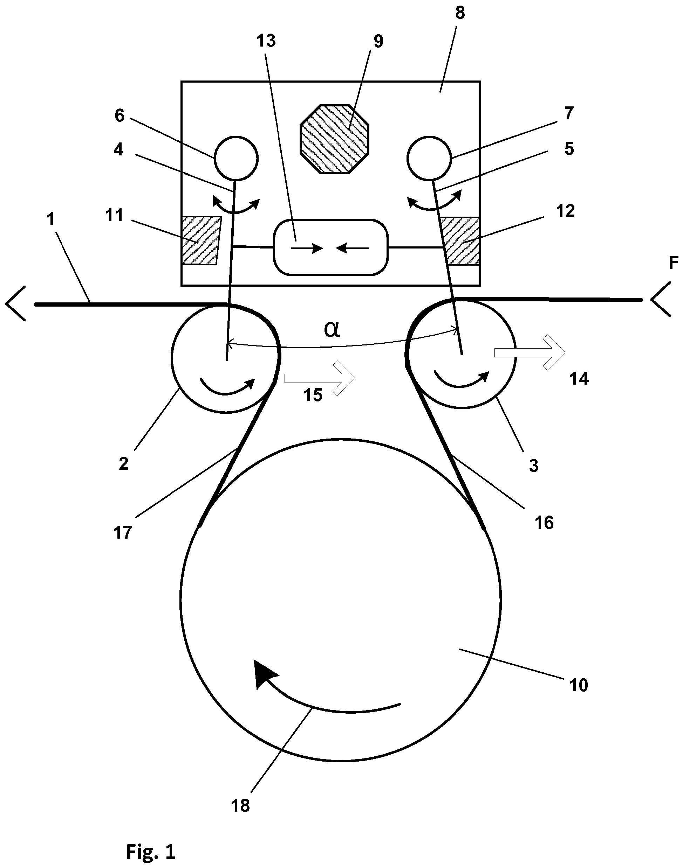

Im Weiteren wird die Erfindung anhand von Figur 1 näher erläutert. Diese zeigt in einer schematischen Darstellung eine Ausführungsform der Spannvorrichtung.

In Figur 1 ist ein Antriebsrad 10 eines Antriebsstranges einer Ringspinnmaschine gezeigt. Das Antriebsrad 10 wird von einem Antriebsriemen 1 teilweise umschlungen. Nach der angegebenen Bewegungsrichtung 15 des Antriebsrades 10 umschlingt der Antriebsriemen 1 in seiner Bewegungsrichtung nach dem Antriebsrad 10 eine erste Spannrolle 2. In der dargestellten Betriebsstellung befindet sich diese erste Spannrolle 2 damit im Leertrum 17 des Antriebsriemens 1, wodurch der Antriebsriemen 1 durch die erste Spannrolle 2 gespannt wird. Vor dem Antriebsrad 10 umschlingt der Antriebsriemen 1 eine zweite Spannrolle 3, diese befindet sich im Zugtrum 16 des Antriebsriemens 1. In der gezeigten Betriebsstellung der Spannvorrichtung ergibt sich eine Kraftrichtung F im Antriebsriemen 1. Die erste Spannrolle 2 ist drehbar an einem ersten Hebel 2 gehalten, welcher in einer ersten Schwenkachse 6 gelagert ist. Die zweite Spannrolle 3 ist drehbar an einem zweiten Hebel 5 gehalten, welcher in einer zweiten Schwenkachse 7 gelagert ist. Der erste Hebel 4 ist mit dem zweiten Hebel 5 über eine Federelement 13 gekoppelt. Das Federelement 13 ist bestrebt den ersten Hebel 4 und den zweiten Hebel 5 einander näher zu bringen. Die beiden Schwenkachsen 6, 7 sind in einem Gehäuse 8 beabstandet voneinander ortsfest gehalten. Das Gehäuse 8 wiederum ist drehfest an einem Träger 9 der Ringspinnmaschine befestigt. Ebenfalls im Gehäuse 8 angebracht sind ein erster Anschlag 11 und ein zweiter Anschlag 12. Der erste Anschlag 11 ist im Gehäuse 8 auf der dem Federelement 13 abgewandten Seite des ersten Hebels 4 angebracht. Der zweite Anschlag 12 ist im Gehäuse 8 auf der dem Federelement 13 abgewandten Seite des zweiten Hebels 5 angebracht. Die Anschläge 11, 12 sind schematisch dargestellt und können in das Gehäuse 8 eingelegt oder auch mit dem Gehäuse 8 verbunden sein.

Bedingt durch die Kraftrichtung F im Antriebsriemen 1 wird die zweite Spannrolle 3 in der Bewegungsrichtung 14 ausgelenkt und dadurch der zweite Hebel 5 gegen den zweiten Anschlag 12 geschwenkt. Durch das Federelement 13, welches den zweiten Hebel 5 mit dem ersten Hebel 4 verbindet, wird der erste Hebel 4 mitgenommen und dadurch die erste Spannrolle 2 in die Bewegungsrichtung 15 ausgelenkt. Die Auslenkung des zweiten Hebels 5 und damit der zweiten Spannrolle 3 wird in der Folge durch den zweiten Anschlag 12 begrenzt. Die Auslenkung der ersten Spannrolle 2 schwenkt den ersten Hebel 4 vom ersten Anschlag 11 weg und wird durch das Leertrum 17 des Antriebsriemens 1 aufgrund der zur Verfügung stehenden Länge des Antriebsriemens 1 begrenzt. Durch die vom Federelement 13 ausgeübte Kraft in der Bewegungsrichtung 15 wird der Antriebsriemen 1 gespannt. Der sich dabei ergebende Winkel α zwischen dem ersten Hebel 4 und dem zweiten Hebel 5 beträgt weniger als 30°. Der Winkel α wird bestimmt durch die Position des zweiten Anschlags 12 und die zur Verfügung stehende Länge des Antriebsriemens 1 in Kombination mit der Länge des Federelementes 13 und dem Abstand zwischen den Schwenkachsen 6, 7.

Tritt nun ein Stromausfall auf bei welchem die Energie der angetriebenen Spindeln über den Antriebsriemen 1 auf das Antriebsrad übertragen werden soll, wird zwar die Drehrichtung 18 des Antriebsrades 10 nicht verändert, aber die Kraftrichtung F im Antriebsriemen 1 wird gedreht. Dadurch wird das vorherige Zugtrum 16 zum Leertrum und das im Normalbetrieb vorhandene Leertrum 17 zum Zugtrum. Diese Umschaltung bewirkt ein schlagartiges Umschalten der Bewegungsrichtungen 14, 15 der ersten Spannrolle 2 und der zweiten Spannrolle 3. In der Folge wird der erste Schwenkhebel 4 an den ersten Anschlag 11 geführt und die zweite Spannrolle 3 übernimmt die Funktion der Spannung des Antriebsriemens 1.

### Legende

- 1: Antriebsriemen
- 2: Erste Spannrolle
- 3: Zweite Spannrolle
- 4: Erster Hebel
- 5: Zweiter Hebel
- 6: Erste Schwenkachse
- 7: Zweite Schwenkachse
- 8: Gehäuse
- 9: Träger
- 10: Antriebsrad
- 11: Erster Anschlag
- 12: Zweiter Anschlag
- 13: Federelement
- 14: Bewegungsrichtung zweite Spannrolle
- 15: Bewegungsrichtung erste Spannrolle
- 16: Zugtrum
- 17: Leertrum
- 18: Drehrichtung Antriebsrad
- F: Kraftrichtung

## Patentansprüche

1. Spannvorrichtung zum Spannen eines Antriebsriemens (1) für Spindeln einer Spinnmaschine mit einer um eine Achse drehbaren ersten Spannrolle (2) welche über einen ersten Hebel (4) schwenkbar ist und mit einer um eine weitere Achse drehbaren zweiten Spannrolle (3) welche über einen zweiten Hebel (5) schwenkbar ist, wobei der erste Hebel (4) und der zweite Hebel (5) voneinander beabstandet auf einer jeweiligen Schwenkachse (6, 7) in einem Gehäuse (8) gehalten und der erste Hebel (4) mit dem zweiten Hebel (5) über ein sich zwischen den Hebeln (4, 5) befindenden Federelement (13) miteinander gekoppelt sind, wobei das Federelement (13) bestrebt ist, den Hebel (4) und den zweiten Hebel (5) einander näherzubringen, **dadurch gekennzeichnet, dass** die Hebel (4, 5) in ihrer Schwenkbewegung um die Schwenkachsen (6, 7) durch jeweils einen Anschlag (11, 12) eingeschränkt sind, derart, dass der Winkel (α) zwischen einer ersten Verbindungslinie von der Achse der ersten Spannrolle (2) zur Schwenkachse (6) des ersten Hebels (4) und einer zweiten Verbindungslinie von der Achse der zweiten Spannrolle (3) zur Schwenkachse (7) des zweiten Hebels (5) kleiner als 30° ist.

2. Spannvorrichtung nach Anspruch 1, **dadurch gekennzeichnet, dass** die Anschläge jeweils auf der dem Federelement (13) abgewandten Seite des jeweiligen Hebels (4, 5) und zwischen der Schwenkachse (6, 7) und der Spannrolle (2, 3) vorgesehen sind.

3. Spannvorrichtung nach Anspruch 1, **dadurch gekennzeichnet, dass** die Anschläge jeweils auf der dem Federelement (13) zugewandten Seite des jeweiligen Hebels (4, 5) und in einem Bereich des jeweiligen Hebels (4, 5) auf einer der Spannrolle (2, 3) gegenüberliegenden Seite der Schwenkachse (6, 7) vorgesehen sind.

4. Spannvorrichtung nach einem der Ansprüche 1 bis 3, **dadurch gekennzeichnet, dass** die Anschläge (11, 12) mit dem Gehäuse (8) einstückig verbunden sind.

5. Spannvorrichtung nach einem der Ansprüche 1 bis 3, **dadurch gekennzeichnet, dass** die Anschläge (11, 12) in das Gehäuse (8) eingelegt sind.

6. Spannvorrichtung nach einem der Ansprüche 1 bis 3, **dadurch gekennzeichnet, dass** die Anschläge (11, 12) ausserhalb des Gehäuses (8) ortsfest befestigt sind.

7. Spannvorrichtung nach einem der Ansprüche 1 bis 6, **dadurch gekennzeichnet, dass** das Federelement (13) eine Zugfeder ist.

8. Spannvorrichtung nach einem der Ansprüche 1 bis 7, **dadurch gekennzeichnet, dass** die Schwenkachsen (6, 7) einen Abstand von 80 mm bis 150 mm aufweisen.

9. Spannvorrichtung nach einem der Ansprüche 1 bis 8, **dadurch gekennzeichnet, dass** die Achse der jeweiligen Spannrolle (2, 3) zur Schwenkachse (6, 7) des jeweiligen Hebels (4, 5) einen Abstand von 80 mm bis 150 mm aufweisen.

10. Spannvorrichtung einem der Ansprüche 1 bis 9, **dadurch gekennzeichnet, dass** ein Abstand zwischen den Schwenkachsen (6, 7) und ein Abstand zwischen der Achse der jeweiligen Spannrolle (2,3) und der Schwenkachse (6,7) des jeweiligen Hebels (4,5) gleich sind.

11. Spinnmaschine mit zumindest einer Spannvorrichtung nach einem der Ansprüche 1 bis 10.

## Claims

1. A tension device for applying tension to a drive belt (1) for spindles of a spinning machine with a first tension roller (2) which can be rotated about an axis and can be pivoted by means of a first lever (4) and with a second tension roller (3) which can be rotated about an additional axis and can be pivoted by means of a second lever (5) wherein the first lever (4) and the second lever (5) are mounted in a housing (8) where they are spaced a distance apart from one another on a respective pivot axis (6, 7) and the first lever (4) is coupled to the second lever (5) by means of a spring element (13) arranged between the levers (5, 6) wherein the spring element (13) tends to bring the first lever (4) and the second lever (5) closer together, **characterized in that** the levers (4, 5) are restricted in their pivoting movement about the pivot axes (6, 7) by means of one stop each (11, 12) such that the angle α between a first connecting line from the axis of the first tension roller (2) to the pivot axis (6) of the first lever (4) and a second connecting line from the axis of the second tension roller (3) to the pivot axis (7) of the second lever (5) is smaller than 30°.

2. The tension device according to claim 1, **characterized in that** the stops are each provided on the side of the respective lever (4, 5) facing away from the spring element (13) and between the pivot axis (6, 7) and the tension roller (2, 3).

3. The tension device according to claim 1, **characterized in that** the stops are each provided on the side of the respective lever (4, 5) facing the spring element (13) and in a region of the respective lever (4, 5) on a side of the pivot axis (6, 7) opposite the tension roller (2, 3).

4. The tension device according to any one of claims 1 to 3, **characterized in that** the stops (11, 12) are connected in one piece to the housing (8).

5. The tension device according to any one of claims 1 to 3, **characterized in that** the stops (11, 12) are inserted into the housing (8).

6. The tension device according to any one of claims 1 to 3, **characterized in that** the stops (11, 12) are mounted in a stationary mount outside of the housing (8).

7. The tension device according to any one of claims 1 to 6, **characterized in that** the spring element (13) is a tension spring.

8. The tension device according to any one of claims 1 to 7, **characterized in that** the pivot axes (6, 7) are at a distance of 80 mm to 150 mm.

9. The tension device according to any one of claims 1 to 8, **characterized in that** the axis of the respective tension roller (2, 3) is at a distance of 80 mm to 150 mm from the pivot axis (6, 7) of the respective lever (4, 5).

10. The tension device according to any one of claims 1 to 9, **characterized in that** the distance between the pivot axes (6, 7) and the distance between the axis of the respective tension roller (2, 3) and the pivot axis (6, 7) of the respective lever (4, 5) are the same.

11. A spinning machine having at least one tension device according to any one of claims 1 through 10.

## Revendications

1. Dispositif tendeur permettant de tendre une courroie d'entraînement (1) de broches d'un métier à filer et comportant un premier galet tendeur (2) qui peut tourner autour d'un axe et qui peut pivoter par l'intermédiaire d'un premier levier (4) et comportant un second galet tendeur (3) qui peut tourner autour d'un autre axe et qui peut pivoter par l'intermédiaire d'un second levier (5), le premier levier (4) et le second levier (5) étant maintenus à distance l'un de l'autre sur un axe de pivotement (6, 7) respectif dans un boîtier (8) et le premier levier (4) étant accouplé au second levier (5) par l'intermédiaire d'un élément ressort (13) situé entre les leviers (4, 5), l'élément ressort (13) rapprochant le levier (4) et le second levier (5) par force, **caractérisé en ce que** les leviers (4, 5) sont limités dans leur mouvement de pivotement autour des axes de pivotement (6, 7) respectivement par une butée (11, 12), de telle sorte que l'angle (a) entre une première ligne de liaison de l'axe du premier galet tendeur (2) à l'axe de pivotement (6) du premier levier (4) et une seconde ligne de liaison de l'axe du second galet tendeur (3) à l'axe de pivotement (7) du second levier (5) est inférieur à 30°.

2. Dispositif tendeur selon la revendication 1, **caractérisé en ce que** les butées sont respectivement prévues sur le côté du levier (4, 5) respectif opposé à l'élément ressort (13) et entre l'axe de pivotement (6, 7) et le galet tendeur (2, 3).

3. Dispositif tendeur selon la revendication 1, **caractérisé en ce que** les butées sont respectivement prévues sur le côté du levier (4, 5) respectif tourné vers l'élément ressort (13) et sur un côté de l'axe de pivotement (6, 7) opposé au galet tendeur (2, 3), dans une zone du levier (4, 5) respectif.

4. Dispositif tendeur selon l'une des revendications 1 à 3, **caractérisé en ce que** les butées (11, 12) sont reliées au boîtier (8) d'un seul tenant.

5. Dispositif tendeur selon l'une des revendications 1 à 3, **caractérisé en ce que** les butées (11, 12) sont insérées dans le boîtier (8).

6. Dispositif tendeur selon l'une des revendications 1 à 3, **caractérisé en ce que** les butées (11, 12) sont fixées à l'extérieur du boîtier (8).

7. Dispositif tendeur selon l'une des revendications 1 à 6, **caractérisé en ce que** l'élément ressort (13) est un ressort de traction.

8. Dispositif tendeur selon l'une des revendications 1 à 7, **caractérisé en ce que** les axes de pivotement (6, 7) sont à une distance de 80 mm à 150 mm.

9. Dispositif tendeur selon l'une des revendications 1 à 8, **caractérisé en ce que** l'axe du galet tendeur (2, 3) respectif est à une distance de 80 mm à 150 mm de l'axe de pivotement (6, 7) du levier (4, 5) respectif.

10. Dispositif tendeur selon l'une des revendications 1 à 9, **caractérisé en ce qu'**une distance entre les axes de pivotement (6, 7) et une distance entre l'axe du galet tendeur (2, 3) respectif et l'axe de pivotement (6, 7) du levier (4, 5) respectif sont identiques.

11. Métier à filer comportant au moins un dispositif tendeur selon l'une des revendications 1 à 10.
